# EUROPÄISCHE PATENTSCHRIFT

(11) **EP 1 636 645 B1**
(45) Veröffentlichungstag und Bekanntmachung des Hinweises auf die Patenterteilung: **20.12.2006**
(21) Anmeldenummer: 04738731.1
(22) Anmeldetag: 17.06.2004
(51) Int. Cl.: G03B 1/22, G03B 1/24

(54) **VORRICHTUNG ZUM TRANSPORT EINES LAUFBILDFILMES**
DEVICE FOR CONVEYING A MOTION PICTURE FILM
DISPOSITIF DE TRANSPORT D'UNE PELLICULE DE PRISE DE VUES

(30) Priorität: 17.06.2003 DE 10327771
(43) Veröffentlichungstag der Anmeldung: 22.03.2006
(73) Patentinhaber: ARNOLD & RICHTER CINE TECHNIK GMBH & CO. BETRIEBS KG, 80799 München (DE)
(72) Erfinder: KEHRER, Klemens, A-1180 Wien (AT)
(74) Vertreter: Ninnemann, Detlef
(86) Internationale Anmeldenummer: PCT/DE2004/001281
(87) Internationale Veröffentlichungsnummer: WO 2004/114012

(56) Entgegenhaltungen:
- DE-A- 4 418 471
- US-A- 3 907 413
- US-A- 4 778 093
- US-A- 4 900 293
- US-A- 5 225 860
- US-A1- 2003 048 419

## Beschreibung

Die Erfindung bezieht sich auf eine Vorrichtung zum Transport eines Laufbildfilmes gemäß dem Oberbegriff des Anspruchs 1.

Aus der DE 44 18 471 A1 ist eine Laufbild-Filmaufnahmekamera zur Belichtung und zum intermittierenden Transport eines ein- oder zweiseitig perforierten Laufbildfilms bekannt. Der in einer mit dem Kameragehäuse der Laufbild-Filmaufnahmekamera verbundenen Filmkassette angeordnete unbelichtete Laufbildfilm tritt durch eine Öffnung in das Kameragehäuse der Laufbild-Filmaufnahmekamera ein und verlässt sie durch diese Öffnung als belichteter Film. Die Zuführung des Laufbildfilms besteht aus einer oder mehreren Filmtransport-Zahnrollen, die den Laufbildfilm kontinuierlich bewegen, während ein Filmschaltwerk den Laufbildfilm intermittierend an einem Bildfenster vorbeibewegt, wo er in der Transportphase durch eine rotierende Umlaufblende abgedeckt und während der Belichtungsphase zur Belichtung freigegeben wird. Zum Ausgleich der kontinuierlichen Filmbewegung und der intermittierenden Filmbewegung bilden sich zu beiden Seiten des Bildfensters Filmschlaufen aus.

Die rotierende Umlaufblende besteht aus einer Blendenscheibe, die entweder von einem Blendenmotor angetrieben wird, der elektrisch mit dem Filmtransport- oder Kameramotor des Filmantriebs gekoppelt ist, so dass die Geschwindigkeiten des Blendenmotors und des Kameramotors synchron verlaufen oder es ist eine unmittelbare mechanische Kopplung vorgesehen, bei der die rotierende Umlaufblende über ein Filmtransportgetriebe mit dem Kameramotor gekoppelt ist.

Das Filmschaltwerk enthält eine Filmführung und ein Tauchgreiferschaltwerk mit einem Transportgreifer, der von einem Greifergetriebe derart bewegt wird, dass seine mindestens eine Transportgreiferspitze während des intermittierenden Transports des Laufbildfilms eine in sich geschlossene Kurbelschleife beschreibt, bei der die Transportgreiferspitze zunächst in die Filmperforation eintaucht, den Filmtransportschritt ausführt, aus der Filmperforation wieder ausschert und in ihre Ausgangslage zurückkehrt. An den Umkehrpunkten der Kurbelschleife des Transportgreifers greift die eine Oszillationsbewegung beschreibende Sperrgreiferspitze eines mit der Bewegung des Transportgreifers korrelierten Sperrgreifers in die Filmperforation ein, nimmt eine eventuelle Korrektur der Ausrichtung des Laufbildfilmes in der Filmebene vor und sichert den Bildstand des Laufbildfilmes während der Belichtung eines Filmbildes. Nach der Belichtung eines Filmbildes des Laufbildfilmes wird die Sperrgreiferspitze wieder herausgezogen, so dass der Laufbildfilm für einen weiteren Filmtransportschritt durch den Transportgreifer freigegeben ist.

Um einen größeren Belichtungsspielraum bei der Belichtung eines Laufbildfilms bzw. eine größere Helligkeitsausbeute bei der Wiedergabe eines Laufbildfilms zu ermöglichen, enthält das Greifergetriebe zwei in gleicher Drehrichtung bewegte Getriebewellen, von denen die eine Getriebewelle eine gegenüber der anderen Getriebewelle n-fache Winkelgeschwindigkeit aufweist und der Hellsektor der Blendenscheibe entweder proportional zur Winkelgeschwindigkeit veränderbar oder der Durchmesser der Blendenscheibe umgekehrt proportional zur Winkelgeschwindigkeit auswählbar ist und der Mittelpunkt der Blende mit abnehmendem Durchmesser der Blendenscheibe zum Bildfenster verlagert wird.

Es ist bekannt, den Laufbildfilm zur Belichtung oder zur Projektion eines Filmbildes je nach gewünschtem Bildformat entweder um drei oder vier Perforationslöcher der ein-oder beidseitigen Filmperforation bei einem Filmtransportschritt zu bewegen und damit unterschiedliche Seitenverhältnisse der Bildformate und bei Filmtransportschritten um drei Perforationslöcher eine um 25 Prozent größere Ausnutzung des verwendeten Filmmaterials zu erzielen.

Aus der DE 690 24 048 T2 (entspricht der US 4 900 293 A) ist eine Zahnrollenbaugruppe zum Anpassen eines Filmprojektors an Filmtransportschritte um drei oder vier Perforationslöcher je Filmbild bekannt, bei der die mit einer Antriebswelle verbundene Zahnrolle entweder aus einer zylindrischen Innenhülse mit in die Filmperforation eingreifenden Zähnen oder einer auf die zylindrische Innenhülse aufsteckbaren zylindrischen Außenhülse mit ebenfalls in die Filmperforation eingreifenden Zähnen besteht. Bei gleicher Drehzahl der Antriebswelle und gleicher Zahnteilung aber unterschiedlichem Durchmesser der Innenhülse und der Außenhülse wird mit der Außenhülse vier/drei-mal soviel Laufbildfilm transportiert wie bei einer Verwendung der Innenhülse bei abgezogener Außenhülse, so dass die Außenhülse für Filmtransportschritte um vier Perforationslöcher je Filmbild und die Innenhülse für Filmtransportschritte um drei Perforationslöcher je Filmbild bestimmt und geeignet ist.

Die bekannte Zahnrollenbaugruppe ist zwar bei einem Filmprojektor einsetzbar, der ausschließlich mit Zahnrollen zum kontinuierlichen und zum intermittierenden Filmtransport mit wahlweise drei oder vier Perforationslöchern je Filmbild ausgerüstet ist. Sie ist jedoch aus den folgenden Gründen nicht, zumindest nicht ohne Einschränkungen, zum Filmtransport um wahlweise drei oder vier Perforationslöcher je Filmbild in einer Laufbild-Filmaufnahmekamera anwendbar wie in der aus der DE 44 18 471 A1 bekannten Laufbild-Filmaufnahmekamera mit Filmzahnrollen zum kontinuierlichen und einem Greiferschaltwerk zum intermittierenden Filmtransport.

Bei einem Filmtransportschritt um vier Perforationslöcher je Filmbild transportiert der Transportgreifer den Laufbildfilm bei einer Umdrehung des Kameramotors um jeweils vier Perforationslöcher, wobei die den Laufbildfilm aus der Filmkassette abziehende Abwickelzahnrolle und die den Laufbildfilm wieder in die Filmkassette fördernde Aufwickelzahnrolle eine Drehung um jeweils vier Zahnteilungen ausführen. Weisen die Zahnrollen jeweils 16 Zähne auf, so drehen sie sich dementsprechend mit einem Viertel der Antriebswelle des das Greiferschaltwerk antreibenden Kameramotors. Demgegenüber transportiert der Transportgreifer bei einem Filmtransportschritt um drei Perforationslöcher je Filmbild den Laufbildfilm bei einer Umdrehung des Kameramotors jeweils drei Perforationslöcher. Zur Einhaltung konstanter Filmschlaufen zum Ausgleich des intermittierenden und des kontinuierlichen Filmtransports muss daher bei einem sowohl das Greiferschaltwerk als auch die Zahnrollen antreibenden Kameramotor die Übersetzung zum Antrieb der Zahnrollen geändert werden, so dass diese sich nur um drei Zähne bei einer Umdrehung der Greiferantriebswelle drehen und eine dementsprechende Filmlänge aus der Filmkassette abziehen und in die Filmkassette fördern.

Eine Anwendung der aus der DE 690 24 048 T2 bekannten Zahnrollenbaugruppe in einer Laufbild-Filmaufnahmekamera mit einem Greiferschaltwerk würde es daher erforderlich machen, die Aufwickelzahnrolle und die Abwickelzahnrolle umzurüsten oder alternativ das Filmtransportgetriebe zum Antrieb der Zahnrollen auszutauschen bzw. durch einen Austausch von Getriebeelementen wie Riemen und Zahnräder an die geänderte Drehzahl des Kameramotors anzupassen. Hierzu müssten jedoch die gesamte Innenkamera der Laufbild-Filmaufnahmekamera oder Teile davon, insbesondere die Kameraelektronik, demontiert werden, was mit einem erheblichen Aufwand und mit zusätzlichen Kosten verbunden ist.

Aufgabe der vorliegenden Erfindung ist es, die eingangs genannte Vorrichtung an einen Filmtransport um drei oder vier Perforationslöcher je Filmbild ohne einen Austausch des Filmtransportgetriebes oder der Aufwickel- und Abwickelzahnrollen bzw. Änderung der Geometrie der Aufwickel- und Abwickelzahnrollen anzupassen.

Diese Aufgabe wird erfindungsgemäß durch die Merkmale des Anspruchs 1 gelöst.

Die erfindungsgemäße Lösung ermöglicht einen Filmtransport in einer Laufbild-Filmaufnahmekamera mit einem Greiferschaltwerk um drei oder vier Perforationslöcher je Filmbild, ohne dass ein Austausch des Filmtransportgetriebes oder der Aufwickel- und Abwickelzahnrollen bzw. eine Änderung der Geometrie der Aufwickel- und Abwickelzahnrollen erforderlich ist.

Die erfindungsgemäße Lösung geht von der Erkenntnis aus, dass es zur Anpassung einer Laufbild-Filmaufnahmekamera mit einem Greiferschaltwerk an einen alternativen Filmtransport um drei oder vier Perforationslöcher je Filmtransportschritt aus konstruktiven Gründen sehr viel einfacher und technisch eleganter ist, nur das als Greiferblock ausgebildete Greiferschaltwerk oder das Greifergetriebe auszutauschen und das Filmtransportgetriebe einschließlich des Kameramotors und der Aufwickel- und Abwickelzahnrollen unverändert zu lassen und stattdessen eine elektrische Umschaltung der Drehzahl des das Greiferschaltwerk und die Zahnrollen antreibenden Kameramotors bzw. des die Zahnrollen antreibenden und elektrisch oder elektronisch mit dem Kameramotor verbundenen Wickelmotors vorzusehen. Während sich der Kameramotor oder Wickelmotor bei einem Filmtransport um vier Perforationslöcher je Filmbild mit der vollen Drehzahl dreht, die der Drehzahl der rotierenden Umlaufblende entspricht, so dass sich die Aufwickel- und Abwickelzahnrollen pro Umdrehung der Antriebswelle des Kameramotors um vier Perforationslöcher weiter bewegen, dreht sich der Kameramotor oder der Wickelmotor bei einem Filmtransport um drei Perforationslöcher -je Filmbild nur mit 3/4 der Drehzahl der rotierenden Umlaufblende, so dass sich die Aufwickel- und Abwickelzahnrollen ebenfalls pro Umdrehung der Antriebswelle des Kameramotors nur um jeweils drei Perforationslöcher weiterbewegen. Da aber der Transportgreifer des Greiferschaltwerks auch bei einem Filmtransport um drei Perforationslöcher je Filmtransportschritt eine volle Umdrehung seiner Kurbelschleife machen muss, wenn die rotierende Umlaufblende eine volle Umdrehung macht, muss das Greifergetriebe eine 4:3 - Übersetzung ausführen, damit der Transportgreifer wieder eine volle Kurbelschleife ausführt, wenn die rotierenden Umlaufblende eine volle Umdrehung macht.

Dementsprechend enthält die erfindungsgemäße Vorrichtung zum Transport eines Laufbildfilmes, der mindestens eine gleichmäßig geteilte Perforationsreihe aufweist, in die eine den Laufbildfilm kontinuierlich von einer Filmvorratspule abwickelnde Abwickelzahnrolle, eine den Laufbildfilm kontinuierlich auf eine Filmaufwickelspule aufwickelnde Aufwickelzahnrolle, sowie ein den Laufbildfilm intermittierend transportierendes Greiferschaltwerk, eingreift. Zum Transport des Laufbildfilmes um drei oder vier Perforationslöcher je Filmtransportschritt bewegen die Aufwickelzahnrolle und die Abwickelzahnrolle den Laufbildfilm mit drei oder vier Perforationslöchern je Filmtransportschritt während verschiedene Greiferschaltwerke für den Transport des Laufbildfilmes um drei oder vier Perforationslöcher je Filmtransportschritt vorgesehen und einsetzbar sind.

Während zum Filmtransport um drei oder vier Perforationslöcher je Filmtransportschritt somit die Aufwickel- und Abwickelzahnrolle mit unterschiedlicher Winkelgeschwindigkeit, d. h. mit unterschiedlicher Drehzahl des die Aufwickel- und Abwickelzahnrolle antreibenden Wickelmotors, angetrieben werden, wird die Geometrie und/oder Kinematik des Greiferschaltwerks dem jeweiligen Filmtransport um drei oder vier Perforationslöcher je Filmtransportschritt angepasst.

Vorzugsweise werden unterschiedliche Greiferschaltwerke für den Filmtransport um drei oder vier Perforationslöcher je Filmtransportschritt als sogenannte "Greiferblock" vorgesehen und beispielsweise über eine seitliche Kameratür im Kameragehäuse bei einer Änderung des Filmtransportschrittes ausgetauscht, ohne dass weitergehende Eingriffe in den Kameramechanismus erforderlich sind.

Da es unterschiedliche Antriebsformen und Antriebskombinationen zum Antrieb des Greiferschaltwerks, der Aufwickel- und Abwickelzahnrolle sowie der Umlaufblende gibt, lässt die erfindungsgemäße Lösung auch verschiedene Ausführungsvarianten zu.

In einer ersten Ausführungsvariante, bei der ein Kameramotor sowohl das Greiferschaltwerk als auch die Aufwickel- und Abwickelzahnrolle antreibt, wird die Drehzahl des Kameramotors für den Transport des Laufbildfilmes um drei oder vier Perforationslöcher je Filmtransportschritt verändert und ein dem Filmtransport um drei oder vier Perforationslöcher je Filmtransportschritt in seiner Kinematik angepasstes Greiferschaltwerk eingesetzt.

In einer zweiten Ausführungsvariante, bei der der Kameramotor das Greiferschaltwerk antreibt, während ein Wickelmotor die Aufwickel- und Abwickelzahnrolle antreibt, mit denen zusammen er üblicherweise in der Filmkassette angeordnet ist, wird nur die Drehzahl des Wickelmotors an den Filmtransport um drei oder vier Perforationslöcher je Filmtransportschritt verändert, während die Geschwindigkeit des Kameramotors unverändert bleibt und das dem Filmtransport um drei oder vier Perforationstöcher je Filmtransportschritt angepasste Greiferschaltwerk als Greiferblock in den Kameramechanismus eingesetzt wird.

Je nach Ausführungsvariante wird entweder die Drehzahl des sowohl das Greiferschaltwerk als auch die Aufwickel- und Abwickelzahnrolle antreibenden Kameramotors oder die Drehzahl des die Aufwickel- und Abwickelzahnrolle antreibenden Wickelmotors bzw. der die Aufwickelzahnrolle und die Abwickelzahnrolle antreibenden Wickelmotore derart umgeschaltet, dass die Aufwickelzahnrolle und die Abwickelzahnrolle den Laufbildfilm mit drei oder vier Perforationslöchern je Filmtransportschritt bewegen.

Die erfindungsgemäße Lösung eignet sich insbesondere für ein Greiferschaltwerk mit einem Greifergetriebe und mindestens einem Transportgreifer mit in die Perforationslöcher des Laufbildfilmes eingreifenden Transportgreiferspitzen, die zum Filmtransport eine längliche, in sich geschlossene Bahnkurve ausführen, bei der sie in die Perforationslöcher eintauchen, den Laufbildfilm um jeweils drei oder vier Perforationslöcher weiter transportieren und anschließend aus den Perforationslöchern ausscheren und in ihre Ausgangslage zurückkehren und dessen Übersetzung einem Filmtransport um drei oder vier Perforationslöcher je Filmbild entspricht.

In dieser-Ausführungsform des Filmschaltwerks als Greifergetriebe kann die Veränderung der Übersetzung des Greifergetriebes für einen Filmtransport um drei oder vier Perforationslöcher je Filmbild durch eine Umschaltung des Greifergetriebes vorgenommen werden.

Die Verbindung des ersten oder zweiten Filmschaltwerks erfolgt vorzugsweise über eine Kupplung mit dem Filmtransportmotor oder mit einem vom Filmtransportmotor angetriebenen Filmtransportgetriebe.

Die Verbindung des jeweiligen Filmschaltwerks mit dem Filmtransportmotor oder dem Filmtransportgetriebe über eine Kupplung ermöglicht einen leichten Austausch für den alternativen Filmtransport um drei oder vier Perforationslöcher je Filmbild, ohne dass größere Eingriffe in das Filmschaltwerk bzw. in die Mechanik der Laufbild-Filmaufnahmekamera erforderlich sind. Insbesondere kann der Austausch ohne Demontage der Steuerelektronik der Laufbild-Filmaufnahmekamera erfolgen und eine ohnehin vorhandene Kupplung zum Abklappen des Greiferschaltwerks beim Einfädeln eines Laufbildfilms in die Laufbild-Filmaufnahmekamera genutzt werden.

Zusätzlich, aber nicht notwendigerweise kann das Greiferschaltwerk einen mit dem Bewegungsablauf des mindestens einen Transportgreifers gekoppelten Sperrgreifer aufweisen, der während des Bildstandes der Filmbilder in ein Perforationsloch des Laufbildfilmes eintaucht.

Grundsätzlich eignet sich die erfindungsgemäße Lösung sowohl für eine Laufbild-Filmaufnahmekamera als auch für einen Projektor, wobei die Vorteile der erfindungsgemäßen Lösung insbesondere dann hervortreten, wenn ein Greiferschaltwerk mit dem Filmtransportgetriebe zum Antrieb der Aufwickel- und Abwickelzahnrolle verbunden ist und ein Gleichlauf mit einer rotierenden Umlaufblende bei der Anpassung an den Filmtransport um drei oder vier Perforationslöcher je Filmbild erfolgen muss, die entweder von einem Blendenmotor angetrieben wird, der elektrisch mit dem Filmtransportmotor gekoppelt ist oder die mechanisch über ein Getriebe mit dem Filmschaltwerk verbunden ist und ebenfalls vom Filmtransportmotor angetrieben wird.

Eine bevorzugte Ausführungsform der Erfindung betrifft eine Laufbild-Filmaufnahmekamera mit einem Kameragehäuse in dem eine rotierende, kreissektorförmige Blendenscheibe im Aufnahmestrahlengang angeordnet ist und das Bildfenster während eines Filmtransportschrittes des Filmschaltwerks abdeckt und den Aufnahmestrahlengang zur Belichtung eines Filmbildes während des Bildstandes des Laufbildfilmes freigibt, und einer mit dem Kameragehäuse zumindest teilweise verbundenen Kameraelektronik, wobei das Greifergetriebe des Filmschaltwerks eine mit dem Filmtransportmotor oder dem Filmtransportgetriebe verbindbare Antriebswelle mit einem ersten Greiferzahnrad, dessen Durchmesser den Filmtransport um drei oder vier Perforationslöcher je Filmbild bestimmt, eine Transportgreiferlasche, deren eines Ende die Transportgreiferspitze oder Transportgreiferspitzen trägt und deren anderes Ende ein Transportgreifergelenk aufweist, das mit einem den Greiferhub des Transportgreifers bestimmenden zweiten Greiferzahnrad verbunden ist und in dessen Mittenabschnitt ein Kurbelgelenk angeordnet ist, das mit einem die Bewegung des Transportgreifers senkrecht zur Ebene des Laufbildfilms bestimmenden dritten Greiferzahnrad verbunden ist, und einen die Greiferzahnräder miteinander verbindenden Zahnriemen enthält.

Zur Anpassung des Greifergetriebes an den Filmtransport um drei oder vier Perforationslöcher je Filmbild kann entweder das erste Zahnrad ausgetauscht und in einer ersten Ausführungsform mit einem dem Filmtransport um drei Perforationslöcher je Filmbild entsprechenden Durchmesser und in einer zweiten Ausführungsform mit einem dem Filmtransport um vier Perforationslöcher je Filmbild entsprechenden Durchmesser vorgehalten werden oder das erste Zahnrad wird in axialer Richtung geteilt und weist ein erstes Teilzahnrad mit einem dem Filmtransport um drei Perforationslöcher je Filmbild entsprechenden ersten Durchmesser und ein zweites Teilzahnrad mit einem dem Filmtransport um vier Perforationslöcher je Filmbild entsprechenden zweiten Durchmesser auf, wobei die Zahnteilungen beider Teilzahnräder übereinstimmen.

Alternativ zu einem Greiferschaltwerk eignet sich die erfindungsgemäße Lösung aber auch für ein Filmschaltwerk, das eine Filmtransport-Zahnrolle enthält, die erfindungsgemäß mit einem dem Filmtransport um drei oder vier Perforationslöcher je Filmbild angepassten Durchmesser vorgehalten wird. Im Unterschied zum Stand der Technik ist es beim Einsatz der erfindungsgemäßen Lösung daher nicht erforderlich, auch die Aufwickel- und Abwickelzahnrolle für einen Filmtransport um drei oder vier Perforationslöcher je Filmbild umzurüsten, sondern lediglich eine Drehzahlanpassung des Filmtransportmotors vorzunehmen und die jeweils benötigte Filmtransport-Zahnrolle in das Filmschaltwerk einzusetzen.

Anstelle eines Einsatzes der jeweils benötigten Filmtransport-Zahnrolle in das Filmschaltwerk kann alternativ jeweils ein Filmschaltwerk mit einer Filmtransport-Zahnrolle für einen Transport des Laufbildfilmes um drei oder vier Perforationslöcher je Filmbild vorgehalten werden, wobei die Filmtransport-Zahnrolle des einen Filmschaltwerks einen dem Filmtransport um drei Perforationslöcher je Filmbild angepassten Durchmesser und das andere Filmschaltwerk eine Filmtransport-Zahnrolle mit einem dem Filmtransport um vier Perforationslöcher je Filmbild angepassten Durchmesser enthält.

Anhand eines in der Zeichnung dargestellten Ausführungsbeispieles soll der der Erfindung zugrundeliegende Gedanke näher erläutert werden. Es zeigen:
- Fig. 1 -: eine Seitenansicht einer Laufbild-Filmaufnahmekamera mit einer Vorrichtung zum Transport eines Laufbildfilmes mit einer Aufwickel- und Abwickelzahnrolle und einem Greiferschaltwerk und
- Fig. 2 -: eine schematisch-perspektivische Darstellung der Filmtransportvorrichtung gemäß Fig. 1.
- Fig. 3a und 3b -: ein Blockschaltbild zur Erläuterung des Filmtransports mit drei bzw. vier Perforationslöchern je Filmtransportschritt mit einem das Greiferschaltwerk und die Aufwickel- und Abwickelzahnrolle antreibenden Kameramotors und eines elektronisch mit dem Kameramotor gekoppelten Blendenmotors zum Antrieb der rotierenden Umlaufblende;
- Fig. 4a und 4b -: ein Blockschaltbild zur Erläuterung des Filmtransports mit drei bzw. vier Perforationslöchern je Filmtransportschritt mit einem das Greiferschaltwerk und die rotierende Umlaufblende antreibenden Kameramotor und einem oder zwei die Aufwickel- und Abwickelzahnrolle antreibenden Wickelmotor(en) und
- Fig. 5a und 5b -: ein Blockschaltbild zur Erläuterung des Filmtransports mit drei bzw. vier Perforationslöchern je Filmtransportschritt mit elektronisch miteinander gekoppeltem Kameramotor, Wickelmotor(en) und Blendenmotor.

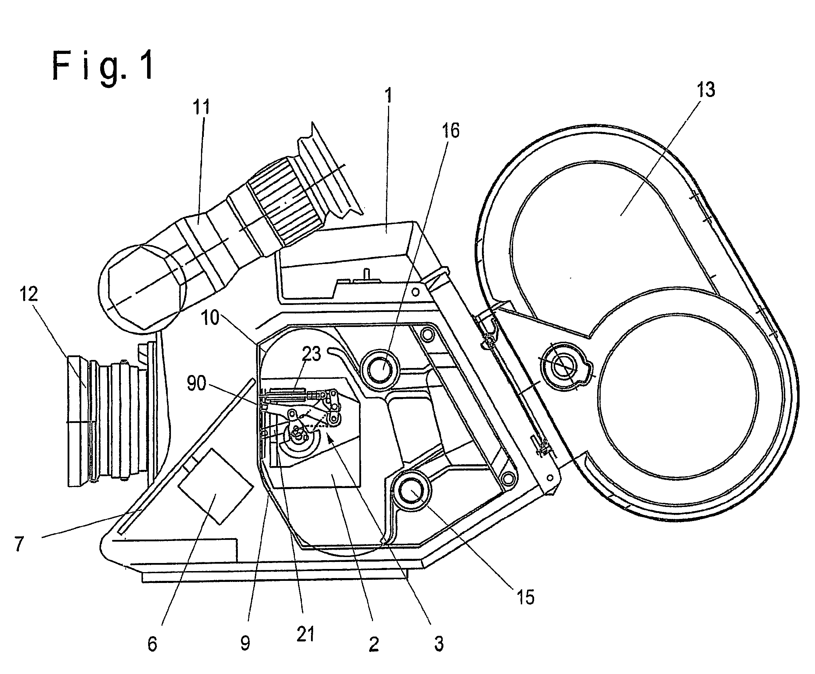

Fig. 1 zeigt eine Laufbild-Filmaufnahmekamera mit einem Kameragehäuse 1, einem Sucherokular 11, einem Kameraobjektiv 12 und einer an das Kameragehäuse 1 angelenkten Kamerakassette 13, in der eine Filmvorratsspule mit einem unbelichteten Laufbildfilm 10 und eine Filmaufwickelspule mit dem mittels der Laufbild-Filmaufnahmekamera belichteten Laufbildfilm angeordnet sind. Das teilweise geöffnet dargestellte Kameragehäuse 1 enthält eine Aufwickelzahnrolle 15 und eine Abwickelzahnrolle 16, die den Laufbildfilm 10 kontinuierlich von der Filmvorratsspule der Kamerakassette 13 abwickeln bzw. kontinuierlich auf die Filmaufwickelspule der Kamerakassette 13 aufwickeln.

Ein von einem nicht näher dargestellten Kameramotor angetriebenes Greiferschaltwerk 2 bewegt den Laufbildfilm 10 intermittierend an einem Bildfenster 90 einer Filmführung 9 vorbei, wo der Laufbildfilm 10 in der Transportphase des Greiferschaltwerks durch eine sektorförmige Blendenscheibe einer rotierenden Umlaufblende 7 abgedeckt und durch einen sektorförmigen Ausschnitt der Blendenscheibe der rotierenden Umlaufblende 7 zur Belichtung eines Filmbildes freigegeben wird. Die sektorförmige Blendenscheibe der rotierenden Umlaufblende 7 wird von einem Blendenmotor 6 angetrieben, der elektrisch mit dem Kameramotor des Greiferschaltwerks 2 gekoppelt ist, so dass die Geschwindigkeiten beider Motoren synchron verlaufen. Alternativ kann eine mechanische Kopplung vorgesehen werden, bei der die rotierende Umlaufblende 7 zusammen mit dem Greiferschaltwerk 2 über ein Filmtransportgetriebe mit dem Kameramotor verbunden ist.

Zum Ausgleich der von den Aufwickel- und Abwickelzahnrollen 15, 16 bewirkten kontinuierlichen Transportbewegung des Laufbildfilmes 10 und der durch das Greiferschaltwerk bewirkten intermittierenden Transportbewegung bilden sich zu beiden Seiten des Bildfensters 90 Filmschlaufen aus.

Das Greiferschaltwerk 2 dient zum Transport des Laufbildfilmes 10 und weist hierzu zwei Transportgreifer 21, 22 und gegebenenfalls zur Sicherung des Bildstandes zwei den Transportgreifern 21, 22 zugeordnete Sperrgreifer 23, 24 auf, die in die Perforationslöcher der Filmperforationen des Laufbildfilmes 10 eintauchen. Weiterhin enthält das Greiferschaltwerk 2 ein Greifergetriebe 3 mit einer Antriebswelle, die mit dem Filmtransportgetriebe oder dem Kameramotor verbunden ist. Die Transportgreifer 21, 22 und Sperrgreifer 23, 24 sind als Tauchgreifer ausgebildet und weisen an ihren dem Laufbildfilm 10 zugewandten Enden Transportgreiferspitzen bzw. Sperrgreiferspitzen auf, die abwechselnd in die Perforationslöcher der Filmperforationen des Laufbildfilmes 10 eintauchen.

Die Transportgreifer 21, 22 führen bei einem Filmtransportschritt eine horizontale und eine vertikale Bewegung aus, wobei die Transportgreiferspitzen eine längliche, in sich geschlossene Kurve durchlaufen und an dem einen Ende der Kurve in die Perforationslöcher der Filmperforationen eintauchen, die sie am anderen Ende der Kurve wieder verlassen, so dass der Abstand der beiden Umkehrpunkte die Hublänge der Transportgreifer 21, 22 bzw. deren Transportgreiferspitzen und damit einen Filmtransportschritt bestimmt.

Durch die mechanische Kopplung der Transportgreifer 21, 22 und der Sperrgreifer 23, 24 befinden sich letztere während eines Filmtransportschrittes, bei dem der Laufbildfilm 10 um ein Filmbild weiterbewegt wird, außerhalb der Filmebene des Laufbildfilmes 10, während die Transportgreiferspitzen in die Filmperforationen eingetaucht sind und den Laufbildfilm 10 entsprechend der vorgegebenen Hublänge zwischen dem oberen und unteren Umkehrpunkt bewegen.

Nach Beendigung eines Filmtransportschrittes verlassen die Transportgreiferspitzen die Filmperforationen, die Sperrgreiferspitzen tauchen in ein mit den Sperrgreiferspitzen fluchtendes Filmperforationsloch der Filmperforationen ein und gewährleisten einen festen Bildstand des Laufbildfilmes 10, von dem der zu belichtende Teil vor dem Bildfenster 90 positioniert ist, das während der Belichtung des Laufbildfilms 10 durch die vor dem Bildfenster 90 angeordnete rotierende Umlaufblende 7 freigegeben wird.

Die Filmführung 9 besteht aus zwei seitlichen Filmauflagen, auf denen der Rand des Laufbildfilmes 10 mit den beidseitigen, parallel zu den Seitenkanten des Laufbildfilmes 10 vorgesehenen Filmperforationen entlang gleitet.

Der intermittierende und kontinuierliche Filmtransport, die Anordnung der Aufwickel- und Abwickelzahnrolle sowie der Antrieb der rotierenden Umlaufblende kann je nach Ausführung der Laufbild-Filmaufnahmekamera unterschiedlich ausgebildet sein.

Neben einer mechanischen Kopplung der rotierenden Umlaufblende mit dem das Greiferschaltwerk antreibenden Kameramotor können auch die Aufwickel- und Abwickelzahnrolle mechanisch mit dem Kameramotor gekoppelt werden. Alternativ hierzu ist eine Anordnung der Aufwickel- und Abwickelzahnrolle in der Filmkassette und deren Antrieb mittels eines elektronisch mit dem Kameramotor gekoppelten Wickelmotors für die Aufwickel- und Abwickelzahnrolle bzw. zweier elektronisch mit dem Kameramotor gekoppelter Wickelmotoren für die Aufwickelzahnrolle bzw. die Abwickelzahnrolle möglich. Weiterhin ist der bereits vorstehend erwähnte getrennte Antrieb der rotierenden Umlaufblende mittels eines Blendenmotors möglich, der ebenfalls elektronisch mit dem Kameramotor gekoppelt ist.

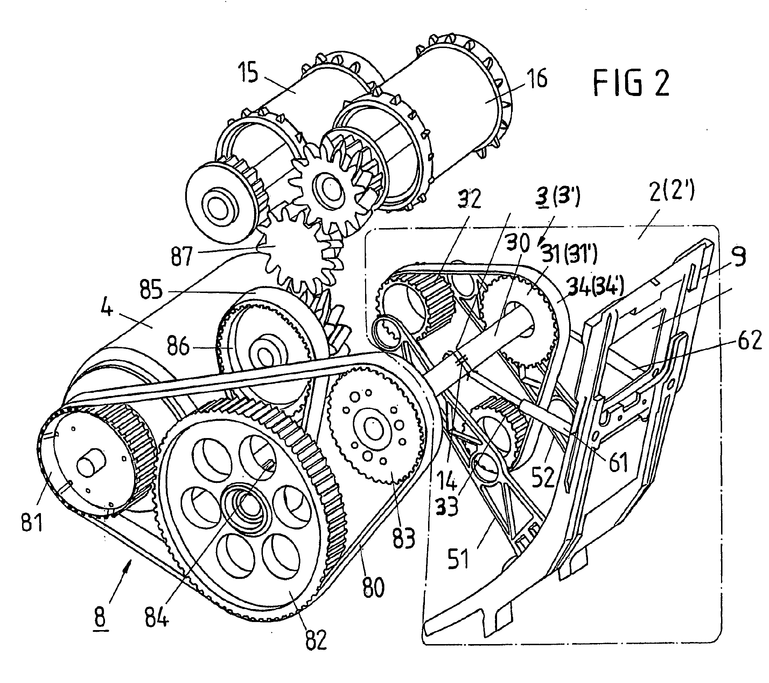

Die in Fig. 2 perspektivisch dargestellte Filmtransportvorrichtung weist entsprechend der in Fig. 1 dargestellten Ausführungsform einer Laufbild-Filmaufnahmekamera einen Kameramotor 4 auf, der über ein Filmtransportgetriebe 8 sowohl die Aufwickelzahnrolle 15 und Abwickelzahnrolle 16 als auch das Greiferschaltwerk 2 antreibt. Das Filmtransportgetriebe 8 enthält ein mit der Motorwelle des Kameramotors 4 verbundenes erstes Filmtransportzahnrad 81, das über einen Filmtransport-Zahnriemen 80 mit einem zweiten Filmtransportzahnrad 82 und einem dritten Filmtransportzahnrad 83 verbunden ist, das die Greiferantriebswelle 30 des Greifergetriebes 3 antreibt.

Das zweite Filmtransportzahnrad 82 ist mit einem vierten Filmtransportzahnrad 84 kleineren Durchmessers gekoppelt, das über einen zweiten Filmtransport-Zahnriemen 85 mit einem ersten Filmwickel-Zahnrad 86 verbunden ist, das über ein zweites Filmwickel-Zahnrad 87 sowie eine nicht näher dargestellte Verbindung die Aufwickelzahnrolle 15 sowie die Abwickelzahnrolle 16 antreibt.

Das Greiferschaltwerk 2 ist mit der Filmführung 9 verbunden, die gebogene Filmkufen zur Führung des Laufbildfilmes und zu dessen Belichtung am Bildfenster 90 aufweist. Das Greiferschaltwerk 2 enthält ein Greifergetriebe 3, die beiden in jeweils eine der beiden Perforationsreihen des Laufbildfilmes eingreifende Transportgreifer 21, 22 sowie in diesem Ausführungsbeispiel zwei in jeweils eine der beiden Perforationsreihen des Laufbildfilmes zur Ausrichtung und Sicherung des Bildstandes bei der Filmbelichtung des Laufbildfilmes eintauchende Sperrgreifer 23, 24.

Die Transportgreifer 21, 22 enthalten eine Transportgreiferlasche, die an ihrem einen Ende ein Transportgreifergelenk und an ihrem anderen Ende jeweils drei Transportgreiferspitzen aufweist, die zum Filmtransport eine längliche in sich geschlossene Kurbelschleife beschreiben, bei der sie zunächst in drei benachbarte Perforationslöcher der Filmperforationen eintauchen, den Filmtransportschritt ausführen, aus der Filmperforation wieder ausscheren und in ihre Ausgangslage zurückkehren. Dabei bestimmt das Transportgreifergelenk die Bewegung der Transportgreiferspitzen senkrecht zur Ebene des Laufbildfilmes und ein zwischen dem Transportgreifergelenk und den Transportgreiferspitzen angeordnetes Kurbelgelenk den Transporthub der Transportgreiferspitzen in Transportrichtung des Laufbildfilmes.

Die Sperrgreifer 23, 24 sind über ein nicht näher dargestelltes Steuerelement mit dem Greifergetriebe 3 so verbunden, dass sie eine oszillierende Bewegung senkrecht zur Filmebene durchführen und dabei mit ihren Sperrgreiferspitzen in jeweils ein Perforationsloch der Filmperforationen im Wechselspiel zu den Transportgreiferspitzen eintauchen.

Das Greifergetriebe 3 weist die mit dem dritten Filmtransportzahnrad 83 des Filmtransportgetriebes 8 verbundene Greiferantriebswelle 30 auf, die ein erstes Greiferzahnrad 31 trägt, das über einen Greifer-Zahnriemen 34 mit einem zweiten Greiferzahnrad 32, das mit den Transportgreifergelenken gekoppelt ist und damit die Bewegung der Transportgreifer 21, 22 senkrecht zur Ebene des Laufbildfilmes bestimmt, sowie mit einem dritten Greiferzahnrad 33 verbunden ist, das mit dem Kurbelgelenk gekoppelt ist und dementsprechend den Transporthub der Transportgreiferspitzen in Transportrichtung des Laufbildfilmes bestimmt.

Die Greiferantriebswelle 30 kann geteilt ausgeführt werden und eine Kupplung 14 aufweisen, die beispielsweise entsprechend der aus der DE 42 05 411 A1 bekannten Kupplung ausgebildet ist. Durch die Anordnung der Kupplung 14 oder durch eine in anderer Weise mit dem dritten Filmtransportzahnrad 83 des Filmtransportgetriebes 8 verbindbare Greiferantriebswelle 30 kann das Greiferschaltwerk 2 in einfacher Weise gegen ein Greiferschaltwerk 2' ausgetauscht und damit bei unveränderter Anordnung des Kameramotors 4 des Filmtransportgetriebes 8 und der Aufwickel- und Abwickelzahnrollen 15, 16 an einen Filmtransport um entweder drei oder vier Perforationslöcher je Filmbild oder Filmtransportschritt angepasst werden.

Neben einem kompletten Austausch des als Greiferblock ausgebildeten Greiferschaltwerks 2 gegen ein Greiferschaltwerk 2' ist auch ein Teilaustausch des Greifergetriebes 3 gegen ein Greifergetriebe 3' mit den Transportgreifern 21, 22 und Sperrgreifern 23, 24 unter Beibehaltung der Filmführung 9 möglich.

Wird anstelle des in Fig. 2 dargestellten Greiferschaltwerks 2 mit Transportgreifern eine Filmtransport-Zahnrolle eingesetzt, so kann diese entweder über ein dem Greifergetriebe 3 entsprechendes Getriebe mit unterschiedlicher Übersetzung angetrieben werden oder es wird jeweils eine Filmtransport-Zahnrolle kleineren Durchmessers für einen Filmtransport um drei Perforationslöcher je Filmbild oder eine Filmtransport-Zahnrolle größeren Durchmessers für einen Filmtransport um vier Perforationslöcher je Filmbild eingesetzt.

In den Fig. 3a, 3b, 4a, 4b und 5a, 5b sind verschiedene Ausführungsformen der erfindungsgemäßen Lösung als Blockschaltbilder dargestellt.

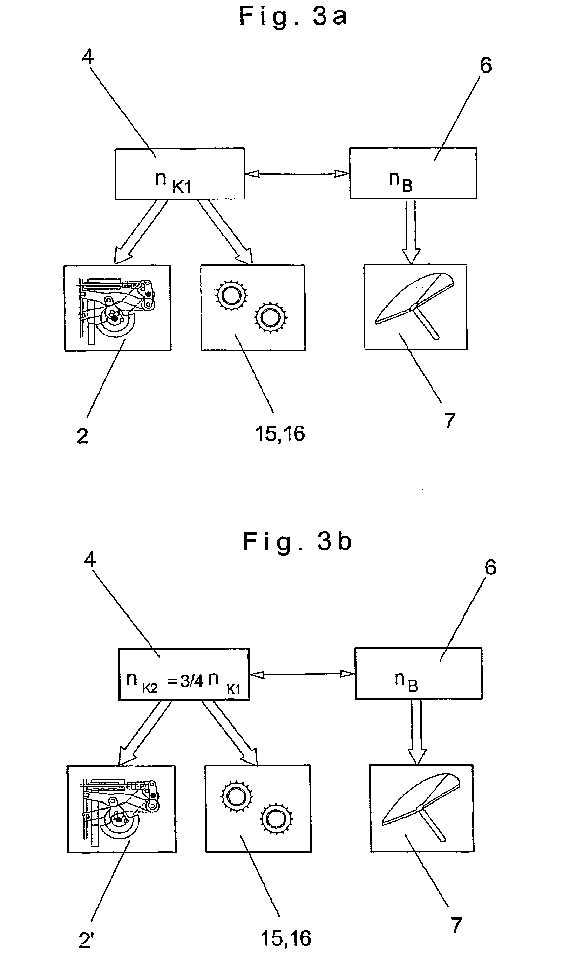

In einer ersten Variante zeigen die Fig. 3a und 3b ein Blockschaltbild des in Fig. 2 perspektivisch dargestellten mechanisch gekoppelten Antriebs des Greiferschaltwerks 2 und der Aufwickel- und Abwickelzahnrolle 15, 16 mittels des Kameramotors 4 und des hiervon getrennten Antriebs der rotierenden Umlaufblende 7 mittels eines elektronisch mit dem Kameramotor 4 gekoppelten Blendenmotors 6.

Bei einem schematisch in Fig. 3a dargestellten Filmtransport des Laufbildfilmes mit vier Perforationslöchern je Filmtransportschritt treibt der Kameramotor 4 das dem Filmtransport um vier Perforationslöcher je Filmtransportschritt angepasste Greiferschaltwerk 2 und die Aufwickel- und Abwickelzahnrolle 15, 16 mit der Drehzahl n_{K1} an, so dass die Aufwickel- und Abwickelzahnrolle 15, 16 den Laufbildfilm um vier Perforationslöcher je Filmtransportschritt bei einer Umdrehung des Greiferschaltwerks weiter drehen. Die Drehzahl n_{B} des Blendenmotors 6 entspricht der Drehzahl n_{K1} des Kameramotors unter Berücksichtigung der Über- oder Untersetzung des mit dem Kameramotor 4 verbundenen Filmtransportgetriebes 8 gemäß Fig. 2.

Bei einem schematisch in Fig. 3b dargestellten Filmtransport um drei Perforationslöcher je Filmtransportschritt treibt der Kameramotor 4 das dem Filmtransport um drei Perforationslöcher je Filmtransportschritt angepasste Greiferschaltwerk 2' und die Aufwickel- und Abwickelzahnrolle 15, 16 mit einer Drehzahl n_{K2} an, die 3 / 4 der Drehzahl n_{K1} für den Filmtransport um drei Perforationslöcher je Filmtransportschritt beträgt. Dadurch werden die Aufwickel- und Abwickelzahnrolle 15, 16 pro Umdrehung nur um drei Perforationslöcher des Laufbildfilmes weiter gedreht, während das Greiferschaltwerk 2' eine volle Umdrehung ausführt, wenn die rotierende Umlaufblende 7 ebenfalls eine volle Umdrehung vollendet. Das Greiferschaltwerk 2' ist mit 4 : 3 gegenüber dem Greiferschaltwerk 2 übersetzt und führt dementsprechend eine volle Umdrehung bei einer vollen Umdrehung der rotierenden Umlaufblende 7 aus, die von dem Blendenmotor 6 angetrieben wird, der elektronisch mit dem Kameramotor 4 gekoppelt ist.

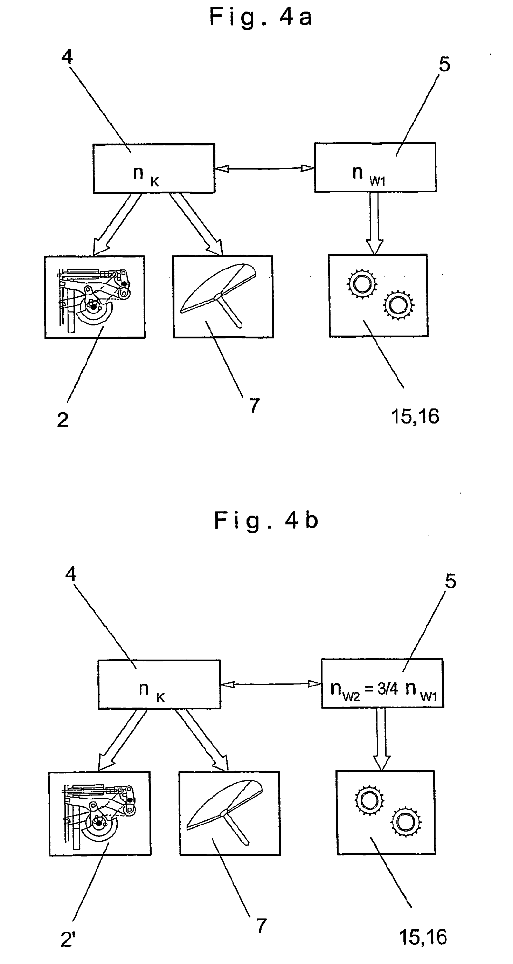

Die Fig. 4a und 4b zeigen in einem Blockschaltbild eine Variante, bei der der Kameramotor 4 sowohl das Greiferschaltwerk 2 bzw. 2' als auch die rotierende Umlaufblende 7 antreibt, während ein die Aufwickel- und Abwickelzahnrolle 15, 16 antreibender Wickelmotor 5 bzw. jeweils ein die Aufwickelzahnrolle 15 und die Abwickelzahnrolle 16 antreibender Wickelmotor elektronisch mit dem Kameramotor 4 gekoppelt ist bzw. sind.

In der Ausführungsform gemäß Fig. 4a wird bei einem Filmtransport um vier Perforationslöcher je Filmtransportschritt der Kameramotor 4 mit der Drehzahl n_{K} bei Einsatz eines dem Filmtransport mit vier Perforationslöchern je Filmtransportschritt angepassten Greiferschaltwerks 2 betrieben, während der Wickelmotor 5 mit der Drehzahl n_{W1} die Aufwickel- und Abwickelzahnrolle 15, 16 antreibt, die den Laufbildfilm bei jedem Filmtransportschritt um vier Perforationslöcher weiter transportieren.

Bei einem schematisch in Fig. 4b dargestellten Filmtransport um drei Perforationslöcher je Filmtransportschritt wird der Kameramotor 4 mit derselben Drehzahl n_{K} zum Antrieb des dem Filmtransport um drei Perforationslöcher je Filmtransportschritt angepassten Greiferschaltwerks 2' und der rotierenden Umlaufblende 7 betrieben. Dagegen rotiert der Wickelmotors 5 mit einer Drehzahl n_{W2}, die 3 / 4 der Drehzahl n_{W1} beträgt, so dass die Aufwickel- und Abwickelzahnrolle 15, 16 um drei Perforationslöcher je Filmtransportschritt weitergedreht werden, während das Greiferschaltwerk 2' und die rotierende Umlaufblende 7 eine volle Umdrehung ausführen.

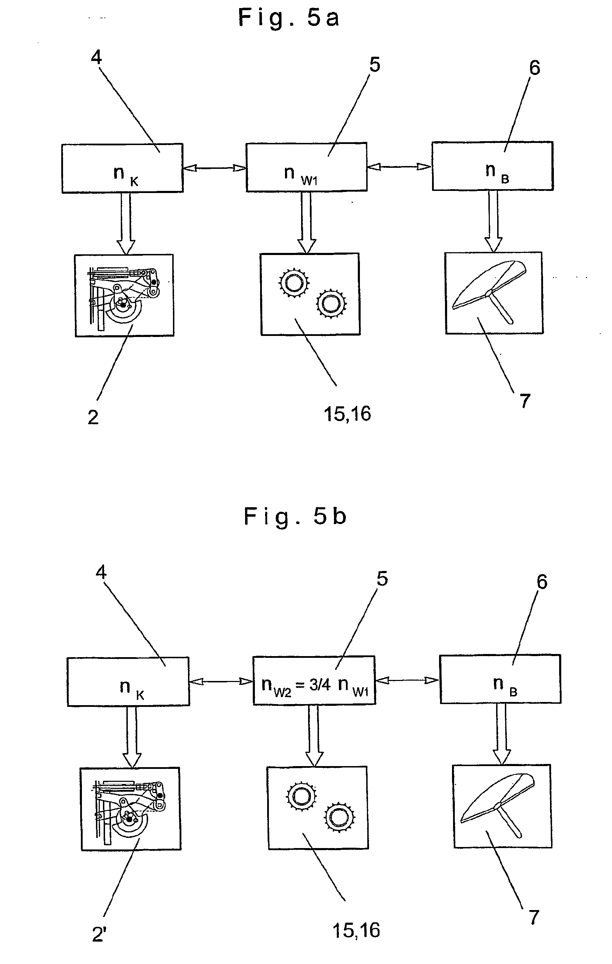

Die Fig. 5a und 5b zeigen ein Blockschaltbild einer Ausführungsvariante mit jeweils einem eigenen Antrieb für das Greiferschaltwerk 2 bzw. 2', die Aufwickel- und Abwickelzahnrolle 15, 16 und die rotierende Umlaufblende 7 mittels eines Kameramotors 4, eines Wickelmotors 5 und eines Blendenmotors 6, die elektronisch miteinander gekoppelt sind.

Bei einem schematisch in Fig. 5a dargestellten Filmtransportschritt von vier Perforationslöchern wird der Kameramotor mit der Drehzahl n_{K} betrieben und treibt ein dem Filmtransportschritt von vier Perforationslöchern angepasstes Greiferschaltwerk 2 an. Der Wickelmotor 5 treibt die Aufwickel- und Abwickelzahnrolle 15, 16 mit einer Drehzahl n_{W1} an, so dass diese den Laufbildfilm bei jedem Filmtransportschritt um vier Perforationslöcher weiter bewegen. Der Blendenmotor 6 wird mit einer Drehzahl n_{B} betrieben, bei der die rotierende Umlaufblende 7 eine volle Umdrehung macht, wenn das Greiferschaltwerk 2 ebenfalls eine volle Kurbelschleife durchlaufen hat und die Aufwickel- und Abwickelzahnrolle 15, 16 den Laufbildfilm um vier Perforationslöcher weiter bewegt haben.

Bei einem schematisch in Fig. 5b dargestellten Filmtransportschritt von drei Perforationslöchern wird der Kameramotor 4 ebenfalls mit der Drehzahl n_{K} betrieben und treibt ein dem Filmtransport um drei Perforationslöcher je Filmtransportschritt angepasstes Greiferschaltwerk 2' an, so dass dieses eine volle Kurbelschleife durchläuft, wenn die vom Blendenmotor 6 mit der Drehzahl n_{B} angetriebene rotierende Umlaufblende 7 eine volle Umdrehung ausführt. Dagegen wird der Wickelmotor 5 mit der Drehzahl n_{W2} betrieben, die 3/4 der Drehzahl n_{W1} beträgt, so dass die Aufwickel- bzw. Abwickelzahnrolle 15, 16 den Laufbildfilm 10 um drei Perforationslöcher je Filmtransportschritt weiter bewegen.

### Bezugszeichenliste

- 1: Kameragehäuse
- 2, 2': Greiferschaltwerk
- 3, 3': Greifergetriebe
- 4: Kameramotor
- 5: Wickelmotor
- 6: Blendenmotor
- 7: Umlaufblende
- 8: Filmtransportgetriebe
- 9: Filmführung
- 10: Laufbildfilm
- 11: Sucherokular
- 12: Kameraobjektiv
- 13: Kamerakassette
- 14: Kupplung
- 15: Aufwickelzahnrolle
- 16: Abwickelzahnrolle
- 17: Blendenmotor
- 21, 22: Transportgreifer
- 23, 24: Sperrgreifer
- 30: Antriebswelle
- 31, 31': Erstes Greiferzahnrad
- 32: Zweites Greiferzahnrad
- 33: Drittes Greiferzahnrad
- 34, 34': Greiferzahnriemen
- 80: Erster Transportzahnriemen
- 81: Erstes Transportzahnrad
- 82: Zweites Transportzahnrad
- 83: Drittes Transportzahnrad
- 84: Viertes Transportzahnrad
- 85: Zweiter Transportzahnriemen
- 86: Fünftes Transportzahnrad
- 87: Sechstes Transportzahnrad
- 90: Bildfenster

## Patentansprüche

1. Vorrichtung zum Transport eines Laufbildfilmes (10), der mindestens eine gleichmäßig geteilte Perforationsreihe aufweist, in die eine den Laufbildfilm kontinuierlich von einer Filmvorratsspule abwickelnde Abwickelzahnrolle (16), eine den Laufbildfilm kontinuierlich auf eine Filmaufwickelspule aufwickelnde Aufwickelzahnrolle (15) und ein den Laufbildfilm intermittierend transportierendes Greiferschaltwerk (2) eingreift,
**dadurch gekennzeichnet,**
**dass** Mittel (14,30,3,3') vorgesehen sind, um verschiedene Greiferschaltwerke (2, 2') für den Transport des Laufbildfilmes (10) um drei oder vier Perforationslöcher je Filmtransportschritt einzusetzen und dass die Aufwickelzahnrolle (15) und die Abwickelzahnrolle (16) den Laufbildfilm (10) dem entsprechend um drei oder vier Perforationslöcher je Filmtransportschritt bewegen.

2. Vorrichtung nach Anspruch 1, **dadurch gekennzeichnet, dass** ein erstes und ein zweites Greiferschaltwerk (2, 2') austauschbar sind.

3. Vorrichtung nach Anspruch 1 oder 2, **dadurch gekennzeichnet, dass** ein Kameramotor (4) das Greiferschaltwerk (2, 2') und die Aufwickel- und Abwickelzahnrolle (15, 16) antreibt, dessen Drehzahl für den Transport des Laufbildfilmes (10) um drei oder vier Perforationslöcher je Filmtransportschritt veränderbar ist.

4. Vorrichtung nach Anspruch 1 oder 2, **dadurch gekennzeichnet, dass** ein Kameramotor (4) das Greiferschaltwerk (2, 2') antreibt und die Aufwickel- und Abwickelzahnrolle (15, 16) mit mindestens einem elektrisch oder elektronisch mit dem Kameramotor (4) gekoppelten Wickelmotor (5) verbunden sind, dessen Drehzahl für den Transport des Laufbildfilmes (10) um drei oder vier Perforationslöcher je Filmtransportschritt veränderbar ist.

5. Vorrichtung nach Anspruch 3 oder 4, **dadurch gekennzeichnet, dass** die Drehzahl des Kameramotors (4) oder des mindestens einen Wickelmotors (5) derart umschaltbar ist, dass die Aufwickelzahnrolle (15) und die Abwickelzahnrolle (16) den Laufbildfilm (10) mit drei oder vier Perforationslöchern je Filmtransportschritt bewegen.

6. Vorrichtung nach mindestens einem der voranstehenden Ansprüche, **gekennzeichnet durch** ein Greiferschaltwerk (2, 2') mit einem Greifergetriebe (3, 3') und mindestens einem Transportgreifer (21, 22) mit in die Perforationslöcher des Laufbildfilmes (10) eingreifenden Transportgreiferspitzen, die zum Filmtransport eine längliche, in sich geschlossene Bahnkurve ausführen, bei der sie in die Perforationslöcher eintauchen, den Laufbildfilm (10) um jeweils drei oder vier Perforationslöcher weiter transportieren und anschließend aus den Perforationslöchern ausscheren und in ihre Ausgangslage zurückkehren, und dass die Übersetzung der Greifergetriebe (3, 3') einem Filmtransport um drei oder vier Perforationslöcher je Filmtransportschritt entspricht.

7. Vorrichtung nach Anspruch 6, **dadurch gekennzeichnet, dass** die Übersetzung des Greifergetriebes (3, 3') umschaltbar ist.

8. Vorrichtung nach Anspruch 6 oder 7, **dadurch gekennzeichnet, dass** das erste oder zweite Greiferschaltwerk (2, 2') über eine Kupplung (14) mit dem Kameramotor (4) oder mit einem vom Kameramotor (4) angetriebenen Filmtransportgetriebe (8) verbindbar ist.

9. Vorrichtung nach Anspruch 6 oder 7, **dadurch gekennzeichnet, dass** das Greifergetriebe (3, 3') eine mit dem Kameramotor (4) oder dem Filmtransportgetriebe (8) verbindbare Antriebswelle (30) mit einem ersten Greiferzahnrad (31), dessen Durchmesser den Filmtransport um drei oder vier Perforationslöcher je Filmtransportschritt bestimmt, eine Transportgreiferlasche, deren eines Ende die Transportgreiferspitze oder Transportgreiferspitzen trägt und deren anderes Ende ein Transportgreifergelenk aufweist, das mit einem die Bewegung der Transportgreiferspitzen senkrecht zur Ebene des Laufbildfilms (10) zweiten Greiferzahnrad (32) verbunden ist und in dessen Mittenabschnitt ein Kurbelgelenk angeordnet ist, das mit einem den Transporthub der Transportgreiferspitzen bestimmenden dritten Greiferzahnrad (33) verbunden ist, und einen die Greiferzahnräder (31, 32, 33) miteinander verbindenden Zahnriemen (34) enthält und dass das erste Greiferzahnrad (31) austauschbar ist und in einer ersten Ausführungsform einen dem Filmtransport um drei Perforationslöcher je Filmtransportschritt entsprechenden Durchmesser und in einer zweiten Ausführungsform einen dem Filmtransport um vier Perforationslöcher je Filmtransportschritt entsprechenden Durchmesser aufweist.

10. Vorrichtung nach mindestens einem der voranstehenden Ansprüche 1 bis 5, **dadurch gekennzeichnet, dass** das Greiferschaltwerk (2, 2') eine Filmtransport-Zahnrolle mit einem dem Filmtransport um drei oder vier Perforationslöcher je Filmtransportschritt angepassten Durchmesser enthält.

11. Vorrichtung nach mindestens einem der voranstehenden Ansprüche, **gekennzeichnet durch** eine mit dem Transport des Laufbildfilms gekoppelte, im Aufnahmestrahlengang einer Laufbild-Filmaufnahmekamera angeordnete und unabhängig von einem Filmtransportschritt um drei oder vier Perforationslöcher angetriebene, rotierende, kreissektorförmige Blendenscheibe (7), die ein Bildfenster (90) während eines Filmtransportschrittes des Greiferschaltwerks (2, 2') abdeckt und den Aufnahmestrahlengang zur Belichtung eines Filmbildes während des Bildstandes des Laufbildfilmes (10) frei gibt.

12. Vorrichtung nach Anspruch 11, **dadurch gekennzeichnet, dass** die Blendenscheibe (7) und das Greiferschaltwerk (2, 2') mit dem Kameramotor (4) verbunden sind.

13. Vorrichtung nach Anspruch 11, **dadurch gekennzeichnet, dass** die Blendenscheibe (7) mit der Antriebswelle eines elektronisch mit dem Kameramotor (4) und mit dem Wickelmotor (5) gekoppelten Blendenmotors (6) verbunden ist.

## Claims

1. Device for the conveyance of a motion picture film (10) comprising at least one row of uniformly spaced perforations, into which an unwinding toothed reel (16) unwinding the motion picture film continuously from a film supply spool, a winding toothed reel (15) winding the motion picture film continuously onto a winding spool, and a gripper feed mechanism (2) conveying the motion picture film intermittently engage,
**characterised in that**
means (14, 30, 3, 3') are provided to employ different gripper feed mechanisms (2,2') for conveying the motion picture film (10) by three or four perforation holes per film transport step, and the winding toothed reel (15) and the unwinding toothed reel (16) move the motion picture film (10) correspondingly by three or four perforation holes per film transport step.

2. Device according to claim 1, **characterised in that** a first and a second gripper feed mechanism (2,2') are interchangeable.

3. Device according to claim 1 or 2, **characterised in that** a camera motor (4) drives the gripper feed mechanism (2,2') and the winding and unwinding toothed reels (15, 16), whose speed can be changed for conveying the motion picture film (10) by three or four perforation holes per film transport step.

4. Device according to claim 1 or 2, **characterised in that** a camera motor (4) drives the gripper feed mechanism (2,2'), and the winding and unwinding toothed reels (15,16) are connected to at least one winding motor (5) being coupled electrically or electronically to the camera motor (4), with the speed of the winding motor (5) being variable for conveying the motion picture film (10) by three or four perforation holes per film transport step.

5. Device according to claim 3 or 4, **characterised in that** the speed of the camera motor (4) or of the at least one winding motor (5) is switchable, such that the winding toothed reel (15) and the unwinding toothed reel (16) move the motion picture film (10) by three or four perforation holes per film transport step.

6. Device according to a least one of the preceding claims, **characterised by** a gripper feed mechanism (2,2') with a gripper gearing (3, 3') and at least one transport gripper (21,22) with transport gripper tips engaging in the perforation holes of the motion picture film (10) and executing, for conveying the film, an elongated closed path curve, during which they project into the perforation holes, convey the motion picture film (10) further by three or four perforation holes each time and then move out of the perforation holes to return to their starting position, and that the translation ratio of the gripper gearing (3,3') corresponds to a film conveyance by three of four perforation holes per film transport step.

7. Device according to claim 6, **characterised in that** the translation ratio of the gripper gearing (3,3') is switchable.

8. Device according to claim 6 or 7, **characterised in that** the first or second gripper feed mechanism (2,2') can be connected through a coupling (14) to the camera motor (4) or to a film transport gearing (8) driven by the camera motor (4).

9. Device according to claim 6 or 7, **characterised in that** the gripper gearing (3,3') comprises a drive shaft (30) connectable to the camera motor (4) or the film transport gearing (8) and comprising a first gripper gear wheel (31), whose diameter determines the film conveyance by three or four perforation holes per film transport step; a transport gripper bracket whose one end supports the transport gripper tip or transport gripper tips and whose other end has a transport gripper joint, which is connected to a second gripper gear wheel (32) for the movement of the transport gripper tips perpendicular to the plane of the motion picture film (10) and in the centre section of which is a crank joint which is connected to a third gripper gear wheel (33) determining the transport stroke of the transport gripper tips; and a toothed belt (34) connecting the gripper gear wheels (31, 32, 33) to each other; and **in that** the first gripper gear wheel (31) is exchangeable and, in a first embodiment, has a diameter corresponding to the film transport by three perforation holes per film transport step and, in a second embodiment, has a diameter corresponding to the film transport by four perforation holes per film transport step.

10. Device according to at least one of the preceding claims 1 to 5, **characterised in that** the gripper feed mechanism (2, 2') comprises a film transport toothed reel with a diameter adapted to the film conveyance by three of four perforation holes per film transport step.

11. Device according to at least one of the preceding claims, **characterised by** a rotating, circular-sector-shaped aperture disc (7) being mounted in the recording beam path of a motion picture film recording camera, being coupled to the conveyance of the motion picture film and being driven independently of a film transport step by three or four perforation holes, wherein the aperture disc (7) covers a picture window (90) during a film transport step of the gripper feed mechanism (2,2') and releases the recording beam path for the exposure of a film frame during the picture stand of the motion picture film (10).

12. Device according to claim 11, **characterised in that** the aperture disc (7) and the gripper feed mechanism (2,2') are connected to the camera motor (4).

13. Device according to claim 11, **characterised in that** the aperture disc (7) is connected to the drive shaft of an aperture motor (6) coupled electronically to the camera motor (4) and to the winding motor (5).

## Revendications

1. Dispositif pour le transport d'une pellicule de prises de vues (10) qui comporte au moins une rangée de perforations régulièrement réparties, dans lesquelles s'engage un galet denté de déroulement (16) qui déroule la pellicule en continu depuis une bobine de réserve de pellicule, un galet denté d'enroulement (15) qui enroule la pellicule en continu sur une bobine de réception de pellicule, et un mécanisme d'avancement à griffe (2) qui transporte la pellicule en continu,
**caractérisé en ce qu'**il est prévu des moyens (14, 30, 3, 3') pour employer différents mécanismes d'avancement à griffe (2, 2') pour le transport de la pellicule (10) à raison de trois ou quatre trous de perforation à chaque opération de transport de pellicule, et **en ce que** le galet denté d'enroulement (15) et le galet denté de déroulement (16) déplacent la pellicule (10) de façon correspondante à raison de trois ou quatre trous de perforation à chaque opération de transport de pellicule.

2. Dispositif selon la revendication 1, **caractérisé en ce qu'**un premier mécanisme d'avancement à griffe et un second mécanisme d'avancement à griffe (2, 2') sont interchangeables.

3. Dispositif selon la revendication 1 ou 2, **caractérisé en ce qu'**un moteur de caméra (4) entraîne le mécanisme d'avancement à griffe (2, 2'), et le galet denté d'enroulement ainsi que le galet denté de déroulement (15, 16), moteur dont la vitesse de rotation peut être modifiée pour le transport de la pellicule (10) à raison de trois ou quatre trous de perforation à chaque opération de transport de pellicule.

4. Dispositif selon la revendication 1 ou 2, **caractérisé en ce qu'**un moteur de caméra (4) entraîne le mécanisme d'avancement à griffe (2, 2'), et le galet denté d'enroulement et le galet denté de déroulement (15, 16) sont reliés à au moins un moteur d'enroulement (5) couplé au moteur de caméra (4) par voie électrique ou électronique, moteur d'enroulement dont la vitesse de rotation peut être modifiée pour le transport de la pellicule (10) à raison de trois ou quatre trous de perforation à chaque opération de transport de pellicule.

5. Dispositif selon la revendication 3 ou 4, **caractérisé en ce que** la vitesse de rotation du moteur de caméra (4) ou dudit au moins un moteur d'enroulement (5) peut être commutée de telle façon que le galet denté d'enroulement (15) et le galet denté de déroulement (16) déplacent la pellicule (10) à raison de trois ou quatre trous de perforation à chaque opération de transport de pellicule.

6. Dispositif selon l'une au moins des revendications précédentes, **caractérisé par** un mécanisme d'avancement à griffe (2, 2') avec une transmission de griffe (3, 3') et au moins une griffe de transport (21, 22) avec des pointes de griffe de transport qui s'engagent dans les trous de perforation de la pellicule (10) et qui exécutent, pour le transport de la pellicule, un trajet oblong fermé sur lui-même, dans lequel elles plongent dans les trous de perforation, elles transportent la pellicule (10) plus loin à raison de trois ou quatre trous de perforation, et elles se dégagent ensuite hors des trous de perforation et retournent dans leurs positions de départ, et en ce que la démultiplication de la transmission de griffe (3, 3') correspond à un transport de la pellicule à raison de trois ou quatre trous de perforation à chaque opération de transport de pellicule.

7. Dispositif selon la revendication 6, **caractérisé en ce que** la démultiplication de la transmission de griffe (3, 3') est commutable.

8. Dispositif selon la revendication 6 ou 7, **caractérisé en ce que** le premier ou le second mécanisme d'avancement à griffe (2, 2') est susceptible d'être relié au moteur de caméra (4) ou à un mécanisme de transport de film (8) entraîné par le moteur de caméra (4) via un accouplement (14).

9. Dispositif selon la revendication 6 ou 7, **caractérisé en ce que** la transmission de griffe (3, 3') comprend un arbre d'entraînement (30) susceptible d'être relié au moteur de caméra (4) ou au mécanisme de transport de pellicule (8) et doté d'une première roue dentée à griffe (31), dont le diamètre détermine le transport de la pellicule à raison de trois ou quatre trous de perforation à chaque opération de transport de film, une patte de griffe de transport, dont une extrémité porte la pointe ou les pointes des griffes de transport, et dont l'autre extrémité comporte une articulation de griffe de transport, laquelle est reliée à une seconde roue dentée à griffe (32) qui détermine le mouvement des pointes de griffes de transport perpendiculairement au plan de la pellicule (10), avec une articulation à bielle agencée dans le tronçon médian de ladite articulation de griffe, ladite articulation à bielle étant reliée à une troisième roue dentée à griffe (33) qui détermine la course de transport des pointes de griffes de transport, et une courroie dentée (34) qui relie les roues dentées à griffe (31, 32, 33) les unes aux autres, et **en ce que** la première roue dentée à griffe (31) est interchangeable, et présente dans un premier mode de réalisation un diamètre qui correspond au transport de la pellicule à raison de trois trous de perforation à chaque opération de transport de pellicule, et dans un second mode de réalisation, un diamètre qui correspond au transport de la pellicule à raison de quatre trous de perforation à chaque opération de transport de pellicule.

10. Dispositif selon l'une au moins des revendications 1 à 5, **caractérisé en ce que** le mécanisme d'avancement à griffe (2, 2') comprend un galet denté de transport de film avec un diamètre adapté au transport de la pellicule à raison de trois ou quatre trous de perforation à chaque opération de transport de pellicule.

11. Dispositif selon l'une au moins des revendications précédentes, **caractérisé par** un disque obturateur (7) en forme de secteur de cercle, accouplé au transport de la pellicule, agencé dans le trajet des rayons de prise de vue d'une caméra à pellicule, entraîné en rotation indépendamment d'une opération de transport de pellicule à raison de trois ou quatre trous de perforation, le disque obturateur couvrant une fenêtre-image (90) pendant une opération de transport de pellicule du mécanisme d'avancement à griffe (2, 2') et libérant le trajet des rayons de prise de vue pour l'exposition d'une image sur la pellicule pendant l'immobilisation de la pellicule (10).

12. Dispositif selon la revendication 11, **caractérisé en ce que** le disque obturateur (7) et le mécanisme d'avancement à griffe (2, 2') sont reliés au moteur de caméra (4).

13. Dispositif selon la revendication 11, **caractérisé en ce que** le disque obturateur (7) est relié à l'arbre d'entraînement d'un moteur d'obturateur (6) couplé par voie électronique au moteur de caméra (4) et au moteur d'enroulement (5).
